# EUROPÄISCHE PATENTSCHRIFT

(11) **EP 2 402 177 B1**
(45) Veröffentlichungstag und Bekanntmachung des Hinweises auf die Patenterteilung: **02.11.2016**
(21) Anmeldenummer: 11164903.4
(22) Anmeldetag: 05.05.2011
(51) Int. Cl.: B60C 11/13

(54) **Fahrzeugluftreifen**
Pneumatic tyres for a vehicle
Pneus de véhicule

(30) Priorität: 01.07.2010 DE 102010017675
(43) Veröffentlichungstag der Anmeldung: 04.01.2012
(73) Patentinhaber: Continental Reifen Deutschland GmbH, 30165 Hannover (DE)
(72) Erfinder: Rittweger, Stefan, 30163, Hannover (DE); Lampe, Oliver, 30627, Hannover (DE)
(74) Vertreter: Finger, Karsten

(56) Entgegenhaltungen:
- EP-A1- 2 050 589
- EP-A2- 1 410 927
- WO-A1-2009/060638
- WO-A1-2012/111297

## Beschreibung

Die Erfindung betrifft einen Fahrzeugluftreifen mit laufrichtungsgebundenem Laufstreifenprofil, welches Profilblockelemente aufweist, die in radialer Richtung R nach außen durch die Mantelfläche des Laufstreifens und in axialer Richtung A durch eine Umfangsrille und in Umfangsrichtung U durch Schrägrillen begrenzt sind, wobei die zu der in Drehrichtung D des Fahrzeugluftreifens bei Vorwärtsfahrt vorgeordneten Schrägrille ein Profilblockelement hin begrenzende Flanke und die zur Umfangsrille das Profilblockelement hin begrenzende Flanke mit spitzem Winkel sich schneiden und dabei eine in Drehrichtung D bei Vorwärtsfahrt weisende spitz zulaufende Ecke des Profilblockelementes bilden.

Derartige Fahrzeugluftreifen mit laufrichtungsgebundenem Laufstreifenprofil sind bekannt. Diese sind für mit einer festen Drehrichtung des Fahrzeugluftreifens für Vorwärtsfahrt konzipiert und sind so am Fahrzeug zu montieren, dass die für die Vorwärtsfahrt vorgesehene Drehrichtung des Fahrzeugluftreifens auch der Drehrichtung des Fahrzeugluftreifens am Fahrzeug bei Vorwärtsfahrt entspricht. Auch bei derartigen laufrichtungsgebundenen Laufstreifenprofilen soll bei regennassen Fahrbahnen das Wasser in Umfangsrichtung und quer zur Umfangsrichtung möglichst schnell und vollständig aus der Bodenaufstandsfläche abgeleitet werden. Die Ableitung in Umfangsrichtung erfolgt dabei im Wesentlichen durch die Umfangsrillen, die Ableitung in Querrichtung durch Schräg- und Querrillen. Beim Abrollen das Fahrzeugluftreifens auf regennassen Fahrbahnen wird hierzu bei den bekannten Fahrzeugluftreifen das Wasser zu einem großen Teil über die Umfangsrillen und - soweit das Wasser in die Schrägrillen bzw. in die Querrillen eindringt - auch über diese aus der Bodenaufstandsfläche abgeleitet. Das in den Umfangsrillen beim schnellen Ablauf auf der Straßenoberfläche gesammelte Wasser wird dabei jedoch nur begrenzt in die Querrillen bzw. Schrägrillen abgeleitet, so dass ein relativ großer Anteil der Ableitung über die Umfangsrillen zur Vermeidung von Aquaplaning abgeleitet werden muss. Um dies zu ermöglichen, muss das Aufnahmevolumen der Umfangsrillen sehr groß dimensioniert werden.

Aus der WO 2009/060638 A1 ist ein Fahrzeugluftreifen gemäß den Merkmalen des Oberbegriffs des Anspruchs 1 bekannt.

Der Erfindung liegt die Aufgabe zu Grunde, bei laufrichtungsgebundenem Laufstreifenprofilen mit Umfangs- und Schrägrillen eine verbesserte Ableitung des Wassers aus dem Bereich der Bodenaufstandsfläche zu ermöglichen.

Die Aufgabe wird erfindungsgemäß durch die Ausbildung eines Fahrzeugluftreifens mit laufrichtungsgebundenem Laufstreifenprofil, welches Profilblockelemente aufweist, die in radialer Richtung R nach außen durch die Mantelfläche des Laufstreifens und in axialer Richtung A durch eine Umfangsrille und in Umfangsrichtung U durch Schrägrillen begrenzt sind, wobei die zu der in Drehrichtung D des Fahrzeugluftreifens bei Vorwärtsfahrt vorgeordneten Schrägrille ein Profilblockelement hin begrenzende Flanke und die zur Umfangsrille das Profilblockelement hin begrenzende Flanke mit spitzem Winkel sich schneiden und dabei eine in Drehrichtung D bei Vorwärtsfahrt weisende spitz zulaufende Ecke des Profilblockelementes bilden, gemäß den Merkmalen von Anspruch 1 gelöst, bei dem die Ecke in axialer Richtung A des Fahrzeugluftreifens zweigeteilt ausgebildet ist, wobei sich der erste Teil längs der das Profilblockelement zur Umfangsrille hin begrenzenden Flanke und der zweite Teil axial neben dem ersten Teil längs der das Profilblockelement zur Schrägrille hin begrenzenden Flanke erstreckt, und dass die Ecke längs ihrer Erstreckung in Umfangsrichtung U jeweils ausgehend von der Schrägrille in ihrem ersten Teil mit degressiv zunehmender Höhe bis zu der Mantelfläche und in ihrem zweiten Teil rampenähnlich mit progressiv zunehmender Höhe bis zu der Mantelfläche ausgebildet ist, wobei die Höhe des zweiten Teils über ihre gesamte Erstreckung bis zur Erreichung der Mantelfläche kleiner als die Höhe des ersten Teiles ist. Der erste Teil der Ecke wirkt wie ein Leitfinne, die die Wasserströmung der Umfangsrille teilt. Diese Leitfinne sowie die rampenähnliche Ausbildung des zweiten Teils bewirken eine schnelle geführte Ableitung von dem abgeteilten Wasserstrom aus der Umfangsrichtung in die Schrägrichtung der Schrägrille hinein. Hierdurch kann in erzwungener Weise ein größerer Anteil aus der Umfangsrille heraus über die Schrägrillen aus dem Bodenaufstandsprofil abgeführt werden. Die Gesamtableitung von Wasser aus dem Bodenaufstandsprofil wird hierdurch verbessert. Wasser kann schneller und vollständiger aus dem Bereich der Bodenaufstandsfläche abgeleitet werden bei optimierter Ausnutzung der Negativanteile des Laufflächenprofiles.

Besonders vorteilhaft ist die Ausbildung eines Fahrzeugluftreifens gemäß den Merkmalen von Anspruch 2, wobei derartige Profilblockelemente in Umfangsrichtung U hintereinander angeordnet und durch Schrägrillen voneinander getrennt eine Profilblockelementreihe bilden, welche sich über den Umfang des Fahrzeugluftreifens erstreckt. Die Ausbildung ermöglicht eine besonders wirkungsvolle Ableitung von Wasser aus dem Laufflächenprofil.

Besonders vorteilhaft zur optimalen Ausschöpfung des Entwässerungspotentials ist die Ausbildung eines Fahrzeugluftreifens gemäß den Merkmalen von Anspruch 3, wobei die Ecke des Profilblockelementes in axialer Richtung bis in eine Position mit axialem Abstand B₃ von der Profilblockelementflanke, welche das in Drehrichtung dem Profilblockelement vorgeordnete Profilblockelement zur Umfangsrille hin an der Einmündung der Schrägrille in die Umfangsrille begrenzt, in die Umfangsrille hinein erstreckt ausgebildet ist mit (1/3)B ≤ B₃ ≤ (1/2)B, wobei B die in axialer Richtung gemessene Breite der Umfangsrille an der Einmündung angibt.

Besonders vorteilhaft ist die Ausbildung eines Fahrzeugluftreifens gemäß den Merkmalen von Anspruch 4, wobei der erste Teil als dünner Steg der Breite B₁ mit 2mm≤ B₁ ≤ 3mm ausgebildet ist. Hierdurch kann eine sichere Aufteilung der Strömung bei ausreichender Stabilität des Steges gewährleistet werden.

Besonders vorteilhaft ist die Ausbildung eines Fahrzeugluftreifens gemäß den Merkmalen von Anspruch 5, wobei der erste Teil sich in Drehrichtung D des Fahrzeugluftreifens über den zweiten Teil hinaus bis in einen Abstand L₁ vom zweiten Teil erstreckt mit 1mm≤ L₁≤ 2mm. Hierdurch kann eine sichere Aufteilung der Strömung bei hoher Stabilität des Steges über die Lebensdauer des Profils gewährleistet werden.

Besonders vorteilhaft ist die Ausbildung eines Fahrzeugluftreifens gemäß den Merkmalen von Anspruch 6, wobei im zweiten Teil auf der radial nach außen weisenden Oberfläche parallele linienförmige, Leitelemente bildende Profilierungen ausgebildet sind, die sich jeweils ausgehend vom ersten Teil bis zur Schrägrille hin erstrecken. Mit Hilfe der parallelen linienförmigen Leitelemente wird das Wassers noch gezielter in die Schrägille umgeleitet. Die Ableitende Wirkung wird hierdurch verstärkt.

Besonders vorteilhaft ist die Ausbildung eines Fahrzeugluftreifens gemäß den Merkmalen von Anspruch 7, wobei die linienförmigen, Leitelemente bildenden Profilierungen Feinstrippen sind, welche in unterschiedlicher radialer Position des Fahrzeugluftreifens sich im zweiten Teil auf der radial nach außen weisenden Oberfläche ausgehend vom ersten Teil bis zur Schrägrille hin erstrecken. Hierdurch kann in besonders einfacher Weise eine verstärkte Ableitwirkung des Wassers in die Schrägille umgesetzt werden.

Besonders vorteilhaft ist die Ausbildung eines Fahrzeugluftreifens gemäß den Merkmalen von Anspruch 8, wobei die linienförmigen, Leitelemente bildenden Profilierungen Feinstrillen sind, welche in unterschiedlicher radialer Position des Fahrzeugluftreifens sich im zweiten Teil auf der radial nach außen weisenden Oberfläche ausgehend vom ersten Teil bis zur Schrägrille hin erstrecken. Hierdurch kann in besonders einfacher Weise eine verstärkte Ableitwirkung des Wassers in die Schrägille umgesetzt werden.

Besonders vorteilhaft ist die Ausbildung eines Fahrzeugluftreifens gemäß den Merkmalen von Anspruch 9, wobei die linienförmigen, Leitelemente bildenden Profilierungen stufenförmige Anhebungen der rampenförmigen Oberfläche sind, welche in unterschiedlicher radialer Position des Fahrzeugluftreifens sich im zweiten Teil auf der radial nach außen weisenden Oberfläche ausgehend vom ersten Teil bis zur Schrägrille hin erstrecken. Hierdurch kann in besonders einfacher Weise eine verstärkte Ableitwirkung des Wassers in die Schrägille umgesetzt werden.

Die Erfindung wird im Folgenden an Hand der in den Figuren 1 bis 8 dargestellten Figuren näher erläutert. Hierin zeigen
- Fig. 1: eine Draufsicht auf einen Laufstreifenprofilabschnitt eines drehrichtungsgebundenen Laufstreifenprofils,
- Fig.2: ein vergrößertes Detail in Draufsicht mit Blick auf die in Drehrichtung bei Vorwärtsfahrt vorgeordnete Ecke eines Profilblockelementes des Laufstreifenprofils von Fig.1,
- Fig.3: das Laufstreifenprofil von Fig.1 und Fig.2 in Schnittdarstellung gemäß Schnitt III-III von Fig.2,
- Fig.4: eine Darstellung der Ecke des Profilblockelementes von Fig.2 und Fig.3 in perspektivischer Sicht in Blickrichtung IV-IV von Fig.2,
- Fig.5: die Ecke eines Profilblockelements von Fig.2 in alternativer Ausführung in Schnittdarstellung gemäß Schnitt III-III von Fig.2
- Fig.6: das Profilblockelement von Fig.5 in perspektivischer Darstellung gemäß Blickrichtung IV-IV von Fig.2,
- Fig.7: die Ecke eines Profilblockelement von Fig.2 in weiterer alternativer Ausführung in Schnittdarstellung gemäß Schnitt III-III von Fig.2,
- Fig.8: das Profilblockelement von Fig.7 in perspektivischer Darstellung gemäß Blickrichtung IV-IV von Fig.2.

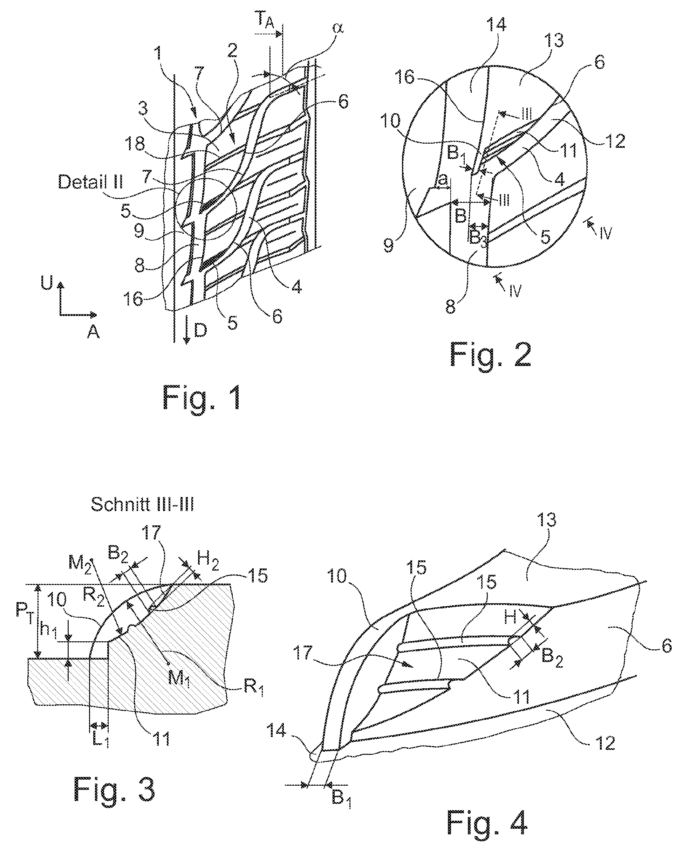

Die Fig. 1 zeigt einen Abschnitt eines drehrichtungsgebundenen Laufstreifenprofils 1 eines Fahrzeugluftreifens mit einer über den gesamten Umfang des Fahrzeugluftreifens erstreckten und in Umfangsrichtung U Umfangsrippe 9, mit einer über den gesamten Umfang des Fahrzeugluftreifen erstreckten und in Umfangsrichtung U ausgerichteten Umfangsrille 8 und mit einer über den gesamten Umfang des Fahrzeugluftreifens erstreckten und in Umfangsrichtung U ausgerichteten Profilblockreihe 2. Die Profilblockreihe 2 ist aus in Umfangsrichtung U hintereinander angeordneten und jeweils durch schräg verlaufende Schrägrille 4 voneinander beabstandeten Profilblockelementen 3 ausgebildet. Die Profilblockreihe 2 und die Umfangsrippe 9 sind in axialer Richtung A durch die Umfangsrille 8 voneinander getrennt. Die Profilblockelemente 3 der Profilblockreihe 2 sind - wie in den Figuren 1 bis 4 dargestellt - jeweils in radialer Richtung R des Fahrzeugluftreifens nach außen durch eine radial äußere, die Bodenkontaktoberfläche bildende Oberfläche 13 und in axialer Richtung A zur Umfangsrille 8 hin jeweils durch eine Flanke 16 begrenzt, welche sich aus dem die Umfangsrille 8 nach radial innen begrenzenden Rillengrund 14 nach radial außen bis zu der radial äußeren die Bodenkontaktoberfläche bildenden Oberfläche 13 erstreckt.

In Fig.1 ist die für die Vorwärtsfahrt vorgesehene Drehrichtung D des Fahrzeugluftreifens mit einem Pfeil dargestellt.

Die Profilblockelemente 3 der Profilblockreihe 2 erstrecken sich in axialer Richtung A ausgehend von der Umfangsrille 8 innerhalb der Breite T_{A} der Bodenaufstandsfläche bis in eine Position außerhalb der Breite T_{A} der Bodenaufstandsfläche hinaus. Die Profilblockelemente 3 sind Umfangsrichtung U des Fahrzeugluftreifens jeweils durch eine dem Profilblockelement 3 vorgeordnete Schrägrille 4 und durch eine dem Profilblockelement 3 nachgeordnete Schrägrille 4 begrenzt. Die Profilblockelemente 3 der Profilblockreihe 2 sind zu der in Drehrichtung D gesehen vorgeordneten Schrägrille 4 hin jeweils durch eine Profilblockelementflanke 6 begrenzt, welche sich ausgehend vom Rillengrund 12 der vorgeordneten Schrägrille 4 in radialer Richtung R nach radial außen bis zu der radial äußeren, die Bodenkontaktoberfläche bildenden Oberfläche 13 des Profilblockelementes 3 erstreckt und die zum Profilblockelement 3 hinweisende Rillenwand dieser Schrägrille 4 bildet. Die Profilblockelemente 3 der Profilblockreihe 2 sind zu der in Drehrichtung D gesehen nachgeordneten Schrägrille 4 hin jeweils durch eine Profilblockelementflanke 7 begrenzt, welche sich ausgehend vom Rillengrund 12 der nachgeordneten Schrägrille 4 in radialer Richtung R nach radial außen bis zu der radial äußeren, die Bodenkontaktoberfläche bildenden Oberfläche 13 des Profilblockelementes 3 erstreckt und die zum Profilblockelement 3 hinweisende Rillenwand dieser Schrägrille 4 bildet.

Die Schrägrillen 4 sind in ihrem Verlauf S-förmig bzw. Z-förmig ausgebildet, wobei sie Neigungswinkel α zur Umfangrichtung U einschließen einen, welcher in einem den Mündungsbereich der Schrägrille in die Umfangsrille 8 bildenden ersten Erstreckungsbereich zwischen 50° und 80°, in einem axial von der Umfangsrille 8 wegweisend nach außen hin sich mit Übergang anschließenden zweiten Erstreckungsbereich Werte zwischen 10° bis 40° zur Umfangsrichtung U und in einem noch weiter axial außen gelegenen dritten Erstreckungsbereich wiederum zwischen 50° und 80° einnimmt. In allen drei Erstreckungsbereichen ist längs der axialen Erstreckung weg von der Umfangsrille 8 die Neigung des Verlaufs der Schrägrille gleichsinnig, d. h. mit in der Fig. 1 in axialer Richtung A von links nach rechts gesehen in der nach oben dargestellten Umfangsrichtung U verlaufender Neigung ausgebildet.

Die Profilblockelemente 3 sind - wie in den Figuren 1 und 2 zu erkennen ist - an ihrer zwischen Umfangsrille 8 und der in Drehrichtung D vorgeordneten Schrägrille 4 hin mit einer sich in Drehrichtung D verjüngenden, eine Spitze bildenden Ecke 5 ausgebildet. Die Umfangsrille 8 und die in Drehrichtung D vorgeordnete Schrägrille 4 schließen die Ecke 5 unter Einschluss eines spitzen Winkels ein.

Wie in den Figuren 1 bis 4 zu erkennen ist, ist die Ecke 5 in axialer Richtung A des Fahrzeugluftreifens zweigeteilt ausgebildet, wobei sich der erste Teil sich bis zu der das Profilblockelement 3 zur Umfangsrille 8 hin begrenzenden Flanke 16 erstreckt und als Steg 10 der Stegbreite B₁ ausgebildet ist und wobei sich der zweite Teil axial daneben längs der das Profilblockelement 3 zur Schrägrille 4 hin begrenzenden Flanke 6 erstreckt und als eine Art Rampe 11 ausgebildet ist. Wie in den Figuren 3 und 4 zu erkennen ist, erhebt sich der Steg 10 an der in Drehrichtung D weisenden äußeren Spitze der Ecke fast senkrecht aus dem Rillengrund 14 der Umfangsrille 8, wobei die Höhe des Steges 10 längs seiner Erstreckung entgegen der Drehrichtung D degressiv zunimmt bis er tangential in die radial äußere, die Bodenkontaktoberfläche bildende Oberfläche 13 übergeht. In dieser Position entspricht die Höhe des Steges 10 der maximalen Profiltiefe P_{T} des Profilblockelementes 3, welche den maximalen radialen Abstand der radial äußeren die Bodenkontaktoberfläche bildenden Oberfläche 13 zum Rillengrund 14 der Umfangsrille 8 angibt.

Längs des Steges 10 im Abstand L₁ mit 1mm ≤ L₁ ≤ 2mm, beispielsweise mit L₁ = 1mm von der in Drehrichtung D weisenden äußeren Spitze der Ecke 5 beginnt die Rampe 11 mit ihrem in Umfangsrichtung U gesehene Erstreckungsbereich entlang des Steges 10. Die Rampe wird nach radial außen durch eine die Rampenoberfläche 17 bildenden Oberfläche begrenzt. Die Rampenoberfläche 17 der Rampe 11 beginnt am Steg 10 im Abstand L₁ in einer Höhe h₁ vom Rillengrund 12 mit zunächst nur geringer radialer Richtungskomponente ihres von der Spitze wegweisenden Verlaufes, wobei längs der Erstreckung der Rampe 11 entlang dem Steg 10 und der Schrägrille 12 die Höhe der Rampe 11 ausgehend von der Höhe h₁ vom Rillengrund 12 progressiv zunimmt und ihren maximalen Steigung in ihrer Schnittposition mit der radial äußeren, die Bodenkontaktoberfläche bildenden Oberfläche 13 einnimmt. In dieser Position Schnittposition endet die Rampe 11.

Die radial äußere Mantelfläche des Steges 10 ist dabei - wie in Fig. 3 zu erkennen ist - um eine auf der zum Fahrzeugluftreifen weisenden Seite der Mantelfläche angeordneten Zylinderachse M₁ eines Zylinders mit Radius R₁ gekrümmt ausgebildet. Die Rampenoberfläche 17 ist - wie in Fig. 3 dargestellt ist - in ihrem wesentlichen Verlauf um eine auf der vom Laufstreifenprofil wegweisenden Seite der Rampenoberfläche 17 liegenden Zylinderachse M₂ mit einem Radius R₂ gekrümmt ausgebildet mit R₁ ≥ R₂.

Wie in Fig.4 dargestellt ist, sind in der Rampenoberfläche 17 parallel verlaufende Feinrippen 15 ausgebildet, welche sich vom Steg 10 bis zur Flanke 6 hin erstrecken. Die Feinrippen 15 sind mit einer senkrecht zur Rampenoberfläche 17 ausgebildeten Erstreckungshöhe H₂ mit 0,5mm ≤ H₂ ≤ 1mm und mit einer in der Rampenoberfläche gemessenen Feinrippenbreite B₂ mit 0,5 mm ≤ B₂ ≤ 1mm ausgebildet. Beispielsweise ist H₂ = B₂ = 0,5mm ausgebildet.

Die Höhe h₁ des Rampenbeginns ist mit 1mm ≤ h₁ ≤ 3mm, beispielsweise mit h₁ = 1mm ausgebildet. Der Abstand L₁ ist mit 1mm ≤ L₁ ≤ 2mm, beispielsweise mit L₁ = 1mm ausgebildet. Die Radien R₁ und R₂ sind mit 15mg ≤ R₁≤ 20mm und 15m ≤ R₂ ≤ 20mm ausgebildet. Beispielsweise ist R₁ = 10mm und R₂ = 10mm ausgebildet.

In Fig. 4 ist ein weiteres Ausführungsbeispiel dargestellt, bei dem die Feinrippen 15 sowie die Schnittkante zwischen Rampenoberfläche 17 und der nach radial außen weisenden Oberfläche 13 parallel zueinander ausgebildet sind. In Fig. 4 ist ein weiteres Ausführungsbeispiel dargestellt, bei dem die Feinrippen 15 sowie die Schnittkante zwischen Rampenoberfläche 17 und der nach radial außen weisenden Oberfläche 13 um die Spitze gekrümmt verlaufend ausgebildet sind.

Fig. 1 und Fig. 2 ist zu entnehmen, dass das Profilblockelement 3 mit seinem in Drehrichtung D ausgebildeten Endbereich in axialer Richtung zur Umfangsrille 8 hin leicht gekrümmt ist. Die Ecke 5 reicht dabei mit ihrem Steg 10 bis in einen in axialer Richtung A des Fahrzeugluftreifens gemessenen Abstand B₃ von dem dem Profilblockelement 3 in Drehrichtung D vorgeordneten Profilblockelement 3 an der Einmündungsstelle der zwischen den beiden Profilblockelementen 13 ausgebildeten Schrägrille 4 in die Umfangsrille 8. Die Umfangsrille 8 ist längs ihrer Erstreckung mit einer Breite B ausgebildet, welche in der radial äußeren Mantelfläche des Fahrzeugluftreifens gemessen wird.

Die Breite B₁ des Steges 10 ist mit 2mm ≤ B₁≤ 3mm, beispielsweise mit B₁ = 2mm ausgebildet. Das Maß B₃ der axialen Erstreckung der Ecke 5 in die Umfangsrille 8 hinein ist mit (1/3)B ≤ B₃ ≤ (1/2)B ausgebildet. Die Breite B der Umfangsrille 8 ist mit 9mm ≤ B≤13mm ausgebildet. Beispielsweise ist B = 9mm und B₃ = 3mm ausgebildet.

Wie in Fig. 1 und 2 zu erkennen ist, ist die Umfangsrille 8 in der Verlängerung der Schrägrille 4 über die Umfangsrille 8 hinweg mit einem axialen Versatz ausgebildet. Dabei ist in der Verlängerung der Flanke 6 der Schrägrille 4 über die Umfangsrille 8 hinweg die zur Umfangsrippe 9 die Umfangsrille 8 hin begrenzende Rillenwand der Umfangsrille 8 mit einem in axialer Richtung A gemessenen Versatzmaß a versetzt mit (1/3)B < a ≤ (1/2)B. Im dargestellten Ausführungsbeispiel ist a = B₃ gewählt.

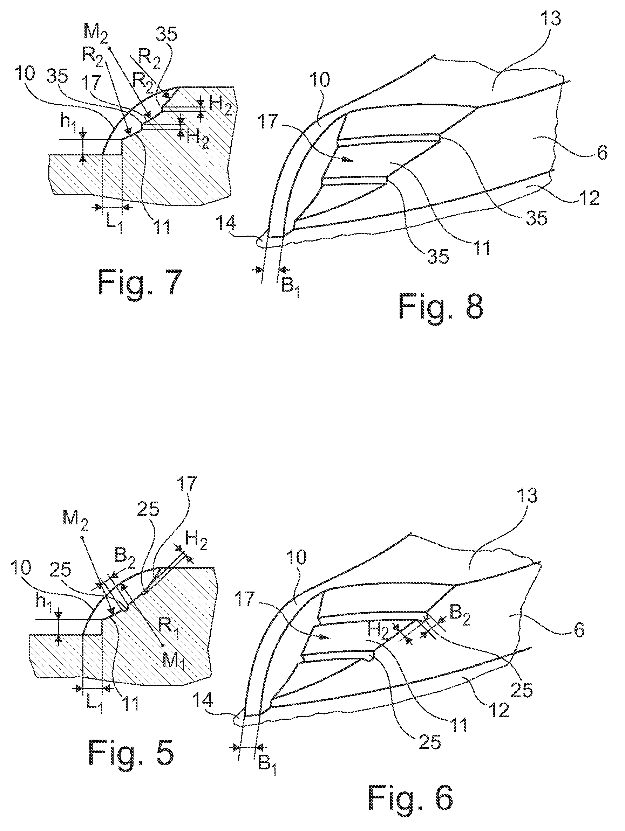

Die Umfangsrille 8 hat im dargestellten Ausführungsbeispiel über ihre gesamte Erstreckung in Umfangsrichtung U hinweg im Wesentlichen die gleiche Rillenbreite B. Die Figuren 5 und 6 zeigen ein alternatives Ausführungsbeispiel der Rampe 11, die - wie in den Figuren 1 bis 4 dargestellt und hierzu beschrieben - ausgebildet ist, wobei jedoch anstelle der Feinrippen 15 mit der Höhe H₂ und der Breite B₂ Feinstrillen 25 mit der Tiefe H₂ und der Breite B₂ ausgebildet sind.

Die Figuren 7 und 8 zeigen ein weiteres alternatives Ausführungsbeispiel der Rampe 11, welche - wie in den Figuren 1 bis 6 dargestellt und hierzu erläutert - ausgebildet sind, wobei jedoch anstelle der Feinstrippen 15 linienförmige stufenartige Anhebungen 35 ausgebildet sind, die die Rampenoberfläche 17 jeweils um die Höhe H₂ anheben. Der Verlauf vom Beginn der Rampe bis zur ersten rampenförmigen Stufe 35 sowie der Verlauf zwischen erster rampenförmigen Stufe 35 zur nächsten rampenförmigen Stufe 35 und der Verlauf zwischen zweiter rampenförmigen Stufe 35 bis zur Schnittlinie zwischen Rampenoberfläche 17 und radial äußerer, die Bodenkontaktoberfläche bildende Oberfläche 13 ist jeweils - analog zu den in Figuren 1 bis 6 dargestellten und erläuterten Ausführungen - mit jeweils mit Radius R₂ gekrümmter Oberflächenkontur ausgebildet.

Die Profiltiefe P_{T} ist mit beispielsweise 9mm ausgebildet.

### Bezugszeichenliste

### (Teil der Beschreibung)

- 1: Laufstreifenprofil
- 2: Profilblockreihe
- 3: Profilblockelement
- 4: Schrägrille
- 5: Ecke
- 6: Flanke
- 7: Flanke
- 8: Umfangsrille
- 9: Umfangsrippe
- 10: Steg
- 11: Rampe
- 12: Rillengrund
- 13: radial äußere, die Bodenkontaktoberfläche bildende Oberfläche
- 14: Rillengrund
- 15: Feinrippe
- 16: Flanke
- 17: Rampenoberfläche
- 18: Feineinschnitt
- 25: Feinstrille
- 35: Stufe

## Patentansprüche

1. Fahrzeugluftreifen mit laufrichtungsgebundenem Laufstreifenprofil (1), welches Profilblockelemente (3) aufweist, die in radialer Richtung R nach außen durch die Mantelfläche des Laufstreifens und in axialer Richtung A durch eine Umfangsrille (8) und in Umfangsrichtung U durch Schrägrillen (4) begrenzt sind, wobei die zu der in Drehrichtung D des Fahrzeugluftreifens bei Vorwärtsfahrt vorgeordneten Schrägrille (4) ein Profilblockelement (3) hin begrenzende Flanke (6) und die zur Umfangsrille (8) das Profilblockelement (3) hin begrenzende Flanke (16) mit spitzem Winkel sich schneiden und dabei eine in Drehrichtung D bei Vorwärtsfahrt weisende spitz zulaufende Ecke (5) des Profilblockelementes (3) bilden, wobei die Ecke (5) in axialer Richtung A des Fahrzeugluftreifens zweigeteilt ausgebildet ist, wobei sich der erste Teil (10) längs der das Profilblockelement (3) zur Umfangsrille (8) hin begrenzenden Flanke (16) und der zweite Teil (11) axial neben dem ersten Teil (10) längs der das Profilblockelement (3) zur Schrägrille (4) hin begrenzenden Flanke (6) erstreckt, wobei die Höhe des zweiten Teils (11) über ihre gesamte Erstreckung bis zur Erreichung der Mantelfläche (13) kleiner als die Höhe des ersten Teiles (10) ist,
**dadurch gekennzeichnet,**
**dass** die Ecke (5) längs ihrer Erstreckung in Umfangsrichtung U jeweils ausgehend von der Schrägrille (4) in ihrem ersten Teil (10) mit degressiv zunehmender Höhe bis zu der Mantelfläche (13) und in ihrem zweiten Teil (11) rampenähnlich mit progressiv zunehmender Höhe bis zu der Mantelfläche (13) ausgebildet ist.

2. Fahrzeugluftreifen gemäß den Merkmalen von Anspruch 1,
wobei derartige Profilblockelemente (3) in Umfangsrichtung U hintereinander angeordnet und durch Schrägrillen (4) voneinander getrennt eine Profilblockelementreihe (2) bilden, welche sich über den Umfang des Fahrzeugluftreifens erstreckt.

3. Fahrzeugluftreifen gemäß den Merkmalen von Anspruch 1 oder 2,
wobei die Ecke (5) des Profilblockelementes (3) in axialer Richtung A bis in eine Position mit axialem Abstand B₃ von der Profilblockelementflanke (16), welche das in Drehrichtung D dem Profilblockelement (3) vorgeordnete Profilblockelement (3) zur Umfangsrille (8) hin an der Einmündung der Schrägrille (4) in die Umfangsrille (8) begrenzt, in die Umfangsrille (8) hinein erstreckt ausgebildet ist mit (1/3)B ≤ B₃ ≤ (1/2)B, wobei B die in axialer Richtung A gemessene Breite der Umfangsrille (8) an der Einmündung angibt.

4. Fahrzeugluftreifen gemäß den Merkmalen von einem oder mehreren der vorangegangenen Ansprüche,
wobei der erste Teil (10) als dünner Steg der Breite B₁ mit 2mm≤ B₁ ≤ 3mm ausgebildet ist.

5. Fahrzeugluftreifen gemäß den Merkmalen von einem oder mehreren der vorangegangenen Ansprüche,
wobei der erste Teil (10) sich in Drehrichtung D des Fahrzeugluftreifens über den zweiten Teil (11) hinaus bis in einen Abstand L₁ vom zweiten Teil (11) erstreckt mit 1mm≤ L₁≤ 2mm.

6. Fahrzeugluftreifen gemäß den Merkmalen von einem oder mehreren der vorangegangenen Ansprüche,
wobei im zweiten Teil (11) auf der radial nach außen weisenden Oberfläche (17) parallele linienförmige, Leitelemente bildende Profilierungen (15,25,35) ausgebildet sind, die sich jeweils ausgehend vom ersten Teil (10) bis zur Schrägrille (4) hin erstrecken.

7. Fahrzeugluftreifen gemäß den Merkmalen von Anspruch 6,
wobei die linienförmigen, Leitelemente bildenden Profilierungen Feinstrippen (15) sind, welche in unterschiedlicher radialer Position des Fahrzeugluftreifens sich im zweiten Teil (11) auf der radial nach außen weisenden Oberfläche (17) ausgehend vom ersten Teil (10) bis zur Schrägrille (4) hin erstrecken.

8. Fahrzeugluftreifen gemäß den Merkmalen von Anspruch 6,
wobei die linienförmigen, Leitelemente bildenden Profilierungen Feinstrillen (25) sind, welche in unterschiedlicher radialer Position des Fahrzeugluftreifens sich im zweiten Teil (11) auf der radial nach außen weisenden Oberfläche (17) ausgehend vom ersten Teil (10) bis zur Schrägrille (4) hin erstrecken.

9. Fahrzeugluftreifen gemäß den Merkmalen von Anspruch 6,
wobei die linienförmigen, Leitelemente bildenden Profilierungen stufenförmige Anhebungen (35) der rampenförmigen Oberfläche (17) sind, welche in unterschiedlicher radialer Position des Fahrzeugluftreifens sich im zweiten Teil (11) auf der radial nach außen weisenden Oberfläche (17) ausgehend vom ersten Teil (10) bis zur Schrägrille (4) hin erstrecken.

## Claims

1. Pneumatic tyre for a vehicle, having a running-direction-bound tread profile (1) which has profile block elements (3) which are bounded outwardly in the radial direction R by the lateral face of the tread, and in the axial direction A by a circumferential groove (8), and in the circumferential direction U by oblique grooves (4), wherein the side wall (6) which bounds a profile block element (3) with respect to the oblique groove (4) arranged in front in the rotational direction D of the pneumatic tyre for a vehicle in the case of forward travel and the side wall (16) which bounds the profile block element (3) with respect to the circumferential groove (8) intersect at an acute angle and at the same time form a corner (5), which runs to a point in the rotational direction D in the case of forward travel, of the profile block element (3), wherein the corner (5) is formed divided in two in the axial direction A of the pneumatic tyre for a vehicle, wherein the first part (10) extends along the side wall (16) which bounds the profile block element (3) with respect to the circumferential groove (8), and the second part (11) extends axially next to the first part (10) along the side wall (6) which bounds the profile block element (3) with respect to the oblique groove (4), and the height of the second part (11) is smaller over its entire extent up to the point where the lateral face (13) is reached than the height of the first part (10),
**characterized**
**in that** the corner (5) is formed in each case starting from the oblique groove (4) along its extent in the circumferential direction U with a degressively increasing height in its first part (10) up to the lateral face (13), and in its second part (11) in a ramp-like fashion with a progressively increasing height up to the lateral face (13).

2. Pneumatic tyre for a vehicle according to the features of Claim 1,
wherein such profile block elements (3) form, while being arranged one behind the other in the circumferential direction U and being separated from one another by oblique grooves (4), a profile block element row (2) which extends over the circumference of the pneumatic tyre for a vehicle.

3. Pneumatic tyre for a vehicle according to the features of Claim 1 or 2,
wherein the corner (5) of the profile block element (3) is embodied extending in the axial direction A into the circumferential groove (8) as far as a position at an axial distance B₃ from the profile block element side wall (16) which bounds that profile block element (3) which is arranged in front of the profile block element (3) in the rotational direction D, with respect to the circumferential groove (8) at the junction where the oblique groove (4) leads into the circumferential groove (8), where (1/3) B ≤ B₃ ≤ (1/2)B, wherein B indicates the width of the circumferential groove (8) measured in the axial direction A at the junction.

4. Pneumatic tyre for a vehicle according to the features of one or more of the preceding claims, wherein the first part (10) is embodied as a thin web with the width B₁ where 2 mm B₁ ≤ 3 mm.

5. Pneumatic tyre for a vehicle according to the features of one or more of the preceding claims, wherein the first part (10) extends in the rotational direction D of the pneumatic tyre for a vehicle over the second part (11) up to a distance L₁ from the second part (11) where 1 mm ≤ L₁ ≤ 2 mm.

6. Pneumatic tyre for a vehicle according to the features of one or more of the preceding claims, wherein in the second part (11) parallel, linear profile arrangements (15, 25, 35) which form guiding elements and which each extend from the first part (10) as far as the oblique groove (4) are constructed on the radially outwardly pointing surface (17).

7. Pneumatic tyre for a vehicle according to the features of Claim 6,
wherein the linear profile arrangements which form guiding elements are very narrow ribs (15) which in the second part (11) extend from the first part (10) as far as the oblique groove (4), at a different radial position of the pneumatic tyre for a vehicle, on the radially outwardly pointing surface (17).

8. Pneumatic tyre for a vehicle according to the features of Claim 6,
wherein the linear profile arrangements which form guiding elements are very narrow grooves (25) which in the second part (11) extend from the first part (10) as far as the oblique groove (4), at a different radial position of the pneumatic tyre for a vehicle, on the radially outwardly pointing surface (17).

9. Pneumatic tyre for a vehicle according to the features of Claim 6,
wherein the linear profile arrangements which form guiding elements are step-shaped elevated portions (35) of the ramp-shaped surface (17) which in the second part (11) extend from the first part (10) as far as the oblique groove (4), at a different radial position of the pneumatic tyre for a vehicle, on the radially outwardly pointing surface (17).

## Revendications

1. Pneumatique de véhicule comprenant un profil de bande de roulement directionnel (1), qui présente des éléments de blocs profilés (3) qui sont limités dans la direction radiale R vers l'extérieur par la surface d'enveloppe de la bande de roulement et dans la direction axiale A par une rainure périphérique (8) et dans la direction périphérique U par des rainures obliques (4), le flanc (6) limitant un élément de bloc profilé (3) par rapport à la rainure oblique (4) disposée en avant lors de la conduite en marche avant dans le sens de rotation D du pneumatique de véhicule et le flanc (16) limitant l'élément de bloc profilé (3) par rapport à la rainure périphérique (8) s'intersectant avec un angle aigu et formant ainsi un coin (5) de l'élément de bloc profilé (3) se terminant en pointe tourné dans le sens de rotation D lors de la conduite en marche avant, le coin (5) étant réalisé de manière divisée en deux dans la direction axiale A du pneumatique de véhicule, la première partie (10) s'étendant le long du flanc (16) limitant l'élément de bloc profilé (3) par rapport à la rainure périphérique (8) et la deuxième partie (11) s'étendant axialement à côté de la première partie (10) le long du flanc (6) limitant l'élément de bloc profilé (3) par rapport à la rainure oblique (4), la hauteur de la deuxième partie (11) sur toute son étendue jusqu'à atteindre la surface d'enveloppe (13) étant inférieure à la hauteur de la première partie (10),
**caractérisé en ce que** le coin (5), le long de son étendue dans la direction périphérique U, est réalisé à chaque fois depuis la rainure oblique (4) avec une hauteur augmentant de manière dégressive jusqu'à la surface d'enveloppe (13) dans sa première partie (10), et en forme de rampe avec une hauteur augmentant progressivement jusqu'à la surface d'enveloppe (13) dans sa deuxième partie (11).

2. Pneumatique de véhicule selon les caractéristiques de la revendication 1,
dans lequel de tels éléments de blocs profilés (3) sont disposés les uns derrière les autres dans la direction périphérique U et forment une rangée d'éléments de blocs profilés (2) séparés les uns des autres par des rainures obliques (4), qui s'étend sur la périphérie du pneumatique de véhicule.

3. Pneumatique selon les caractéristiques de la revendication 1 ou 2,
dans lequel le coin (5) de l'élément de bloc profilé (3) est réalisé de manière à s'étendre dans la rainure périphérique (8) dans la direction axiale A jusque dans une position à une distance axiale B₃ du flanc de l'élément de bloc profilé (16), qui limite l'élément de bloc profilé (3) placé en avant de l'élément de bloc profilé (3) dans le sens de rotation D par rapport à la rainure périphérique (8) au niveau de l'embouchure de la rainure oblique (4) dans la rainure périphérique (8), avec (1/3)B ≤ B₃ ≤ (1/2)B, B indiquant la largeur de la rainure périphérique (8) au niveau de l'embouchure, mesurée dans la direction axiale A.

4. Pneumatique de véhicule selon les caractéristiques d'une ou plusieurs des revendications précédentes, dans lequel la première partie (10) est réalisée sous forme de nervure mince de largeur B₁ avec 2 mm ≤ B₁ ≤ 3 mm.

5. Pneumatique de véhicule selon les caractéristiques d'une ou plusieurs des revendications précédentes, dans lequel la première partie (10) s'étend dans le sens de rotation D du pneumatique de véhicule au-delà de la deuxième partie (11) jusqu'à une distance L₁ de la deuxième partie (11), avec 1 mm ≤ L₁ ≤ 2 mm.

6. Pneumatique de véhicule selon les caractéristiques d'une ou plusieurs des revendications précédentes, dans lequel, dans la deuxième partie (11), sur la surface (17) tournée radialement vers l'extérieur, sont réalisés des profilages parallèles (15, 25, 35) de forme linéaire formant des éléments conducteurs qui s'étendent à chaque fois à partir de la première partie (10) jusqu'à la rainure oblique (4).

7. Pneumatique de véhicule selon les caractéristiques de la revendication 6,
dans lequel les profilages de forme linéaire formant des éléments conducteurs sont de très fines nervures (15) qui s'étendent dans une position radiale différente du pneumatique de véhicule dans la deuxième partie (11) sur la surface (17) tournée radialement vers l'extérieur depuis la première partie (10) jusqu'à la rainure oblique (4).

8. Pneumatique de véhicule selon les caractéristiques de la revendication 6,
dans lequel les profilages de forme linéaire formant des éléments conducteurs sont de très fines rainures (25) qui s'étendent dans une position radiale différente du pneumatique de véhicule dans la deuxième partie (11) sur la surface (17) orientée radialement vers l'extérieur depuis la première partie (10) jusqu'à la rainure oblique (4).

9. Pneumatique de véhicule selon les caractéristiques de la revendication 6,
dans lequel les profilages de forme linéaire formant des éléments conducteurs sont des rehaussements de forme étagée (35) de la surface en forme de rampe (17) qui s'étendent dans une position radiale différente du pneumatique de véhicule dans la deuxième partie (11) sur la surface (17) tournée radialement vers l'extérieur depuis la première partie (10) jusqu'à la rainure oblique (4).
